# EUROPÄISCHE PATENTSCHRIFT

(11) **EP 3 891 561 B1**
(45) Veröffentlichungstag und Bekanntmachung des Hinweises auf die Patenterteilung: **11.09.2024**
(21) Anmeldenummer: 19805602.0
(22) Anmeldetag: 13.11.2019
(51) Int. Cl.: G05B 13/02, G05B 19/418, G05B 19/042

(54) **STEUEREINRICHTUNG ZUR STEUERUNG EINER FERTIGUNGSANLAGE SOWIE FERTIGUNGSANLAGE UND VERFAHREN**
CONTROL DEVICE FOR CONTROLLING A MANUFACTURING PLANT, MANUFACTURING PLANT AND METHOD
DISPOSITIF DE COMMANDE POUR LA COMMANDE D'UNE INSTALLATION DE PRODUCTION AINSI QU'INSTALLATION DE PRODUCTION ET PROCÉDÉ

(30) Priorität: 05.12.2018 DE 102018221002
(43) Veröffentlichungstag der Anmeldung: 13.10.2021
(73) Patentinhaber: Robert Bosch GmbH, 70442 Stuttgart (DE)
(72) Erfinder: HLAVAC, Marcus, 71229 Leonberg-Hoefingen (DE); SCHOEPF, Martin, 70499 Stuttgart (DE); WALTHER, Michael, 71272 Renningen (DE)
(86) Internationale Anmeldenummer: PCT/EP2019/081143
(87) Internationale Veröffentlichungsnummer: WO 2020/114739

(56) Entgegenhaltungen:
- DE-A1- 102017 009 428
- DE-A1- 102017 130 429
- US-A1- 2018 341 248

## Beschreibung

### Stand der Technik

Es wird eine Steuereinrichtung zur Steuerung einer Fertigungsanlage vorgeschlagen. Die Fertigungsanlage umfasst mindestens eine Prozessstation zur Durchführung eines Fertigungsprozesses, wobei die Fertigungsanlage und/oder die Prozessstation mindestens einen Prozessparameter zur Regelung und/oder Steuerung aufweist. Ferner weist die Fertigungsanlage und/oder die Prozessstation mindestens eine Erfassungseinrichtung zur Erfassung eines Prozessmerkmals auf. Die Steuereinrichtung umfasst ein Steuerungsmodul, wobei das Steuerungsmodul ausgebildet ist, basierend auf einem Machine-Learning-Algorithmus, einen Regelwert oder ein Modell zu bestimmen.

Fertigungsanlagen und Prüfanlagen finden vielfältigen Einsatz in der Produktion, Prüf- und Messtechnik. Fertigungsanlagen und Prüfanlagen sind zur Durchführung von Fertigungsprozessen und/oder Prüfprozessen ausgebildet. Dabei wird häufig eine Mehrzahl an Prozessen in einem Gesamtablauf durchgeführt. Diese Prozesse können von unterschiedlichen Prozessstationen durchgeführt werden. Um ein Optimum der Qualität und der Fertigungs- und/oder Prüfkosten zu erreichen, müssen diese Prozesse und deren Parameter geregelt, eingestellt und/oder optimiert werden. Diese Regelung erfolgt insbesondere während des laufenden Betriebs. Während der Fertigung und/oder der Prüfung kommt es jedoch häufig zu Chargenschwankungen des eingesetzten Materials und/oder zu Werkzeugverschleiß. Solche Änderungen müssen auch in der Parametrisierung der Prozesse berücksichtigt werden. Bisher erfolgt eine Nachregulierung durch einen erfahrenen Benutzer oder Einsteller.

Die Druckschrift DE 10 2016 206 031 A1, beschreibt eine Schweißvorrichtung und ein Verfahren zur Überwachung und Regelung eines Schweißprozesses. Dabei erfolgt das Schweißen mit einem Schweißwerkzeug, welches von einer Einrichtung überwacht und/oder geregelt wird. Als Ermittlungsgrößen werden unterschiedliche Schweißprozessgrößen bestimmt, beispielsweise eine Spannung, eine Stromstärke und/oder eine Kraft. Dabei wird basierend auf diesen Größen auf eine weitere Prozessgröße, beispielsweise eine Temperatur, geschätzt, um so den Schweißprozess zu verbessern und/oder zu optimieren.

Die Druckschrift US 2018/341248 A1, die wohl den nächstkommenden Stand der Technik bildet, beschreibt auf maschinellem Lernen basierende Verfahren und Systeme zur automatisierten Klassifizierung von Objektfehlern und zur adaptiven Echtzeitsteuerung von additiven Fertigungs- und / oder Schweißprozessen.

### Offenbarung der Erfindung

Es wird eine Steuereinrichtung zur Steuerung einer Fertigungsanlage mit den Merkmalen des Anspruchs 1 vorgeschlagen. Ferner wird eine Fertigungsanlage mit den Merkmalen des Anspruchs 13 und ein Verfahren zur Steuerung der Fertigungsanlage mit den Merkmalen des Anspruchs 15 vorgeschlagen. Bevorzugte und/oder vorteilhafte Ausführungsformen der Erfindung ergeben sich aus den Unteransprüchen, der Beschreibung und den beigefügten Figuren.

Es wird eine Steuereinrichtung zur Steuerung einer Fertigungsanlage vorgeschlagen. Die Steuereinrichtung ist beispielsweise als ein Computer oder als eine Prozessor- und/oder Mikrochipeinheit ausgebildet. Mittels der Steuereinrichtung ist die Fertigungsanlage steuerbar, parametrisierbar, optimierbar und/oder einstellbar. Insbesondere ist die Steuereinrichtung zur fortlaufenden und/oder initialen Optimierung, Steuerung und/oder Einstellung der Fertigungsanlage ausgebildet. Beispielsweise wird als Optimierung verstanden die Fertigungsanlage bezüglich Fertigungsqualität und/oder Fertigungskosten zu verbessern. Die Fertigungsanlage ist zur Herstellung eines Werkstücks ausgebildet und/oder zur Überprüfung eines Werkstücks. Im Speziellen kann unter einer Fertigungsanlage eine Prüfanlage verstanden werden, wobei Prüfschritte dann als Fertigungsprozess verstanden werden. Insbesondere ist die Fertigungsanlage eine Fabrikationsanlage.

Die Steuereinrichtung kann eine dezentrale oder eine zentrale Steuereinrichtung bilden. Beispielsweise ist die Steuereinrichtung datentechnisch mit der Fertigungsanlage verbunden und/oder verbindbar.

Die Fertigungsanlage weist mindestens eine Prozessstation auf. Insbesondere weist die Fertigungsanlage mehr als zwei oder mehr als zehn Prozessstationen auf. Die Prozessstationen können lokale Positionen und/oder Stationen sein, welche zum Beispiel räumlich getrennt sind. Alternativ können Prozessstationen räumlich zusammenfallen. Die Prozessstationen sind zur Durchführung eines Fertigungsprozesses ausgebildet. Insbesondere führen unterschiedliche Prozessstationen unterschiedliche Fertigungsprozesse aus. Die Fertigungsprozesse können als Teilprozesse der Fertigungsanlage und/oder der Herstellung des Werkstückes verstanden werden. Beispielsweise ist ein Fertigungsprozess ein Zerspanen, eine Wärmebehandlung oder ein Umformen. Die Fertigungsprozesse unterschiedlicher Prozessstationen können aufeinanderfolgen und/oder aufeinander abgestimmt sein. Insbesondere können Prozessstationen und/oder Fertigungsprozesse ineinander eingreifen. Ferner ist es möglich, dass Fertigungsprozesse parallel laufen.

Die Fertigungsanlage und/oder die Prozessstation weist mindestens einen Prozessparameter auf. Insbesondere kann eine Prozessstation und/oder die Fertigungsanlage eine Mehrzahl an Prozessparametern aufweisen. Die Prozessparameter sind insbesondere einstellbare, regelbare und/oder steuerbare Größen. Mittels der Prozessparameter ist der Fertigungsprozess und/oder die Fertigungsanlage steuerbar und/oder regelbar. Durch das Einstellen und/oder Verändern eines Prozessparameters können beispielsweise die Geschwindigkeit und/oder die Qualität eines Fertigungsprozesses und/oder der gesamten Fertigungsanlage verändert werden. Insbesondere ist es möglich, dass die Veränderung eines Prozessparameters einer Prozessstation sich auf eine weitere andere Prozessstation auswirken kann. Insbesondere ist es manchmal möglich, dass durch das Ändern eines Prozessparameters ein weiterer Prozessparameter der gleichen Prozessstation oder einer anderen Prozessstation nachgeregelt werden muss.

Die Fertigungsanlage und/oder die Prozessstation weist mindestens eine Erfassungseinrichtung zur Erfassung eines Prozessmerkmals auf. Das Prozessmerkmal ist beispielsweise eine Größe, welche den Fertigungsprozess und/oder ein hergestelltes Werkstück charakterisiert. Die Erfassungseinrichtung kann eine Sensoreinrichtung zur Erfassung einer physikalischen, chemischen und/oder mechanischen Größe sein, welche den Fertigungsprozess und/oder das Werkstück charakterisiert. Beispielsweise ist das Prozessmerkmal eine Temperatur- oder eine Formabweichung. Insbesondere kann das Prozessmerkmal auch ein Qualitätsmerkmal des Werkstücks und/oder des Fertigungsprozesses sein. Dabei kann es vorgesehen sein, dass die Erfassungseinrichtung eine Eingabeeinrichtung umfasst, mittels welcher ein Nutzer Qualitätsmerkmale eingeben und/oder hinterlegen kann. Qualitätsmerkmale können insbesondere aus einer nachfolgenden und/oder nachgelagerten Qualitätssicherung des Werkstücks und/oder der Fertigungsanlage stammen. Insbesondere kann eine Prozessstation durch mehrere Prozessmerkmale charakterisierbar sein. Die Änderung und/oder Regelung eines Prozessparameters führt vorzugsweise zu einer Veränderung des Prozessmerkmales. Prozessparameter und Prozessmerkmal sind somit insbesondere in einer Ursache-Wirkungs-Beziehung verbunden. Weist die Fertigungsanlage mehrere Prozessstationen und/oder mehrere Fertigungsprozesse auf, so können die mehreren Prozessparameter gesteuert und/oder geregelt werden, wobei vorzugsweise für die unterschiedlichen Fertigungsprozesse und/oder Prozessstationen jeweils eigene Prozessmerkmale bestimmt werden und/oder bestimmbar sind.

Die Steuereinrichtung weist ein erstes Steuerungsmodul und ein zweites Steuerungsmodul auf. Das erste Steuerungsmodul und das zweite Steuerungsmodul können von einem gemeinsamen Rechner oder einem gemeinsamen Datenverarbeitungsmodul umfasst sein. Das erste Steuerungsmodul und das zweite Steuerungsmodul können als ein Softwaremodul oder als ein Hardwaremodul ausgebildet sein. Dem ersten Steuerungsmodul und dem zweiten Steuerungsmodul sind insbesondere die Prozessparameter und/oder die Prozessmerkmale bereitgestellt. Insbesondere kann es vorgesehen sein, dass das erste Steuerungsmodul und das zweite Steuerungsmodul datentechnisch mit der Fertigungsanlage und/oder der Prozessstation verbunden sind, um so beispielsweise die Prozessparameter zu regeln, zu verändern und/oder zu steuern. Das erste Steuerungsmodul und das zweite Steuerungsmodul sind zur Durchführung und/oder Ausführung eines Machine-Learning-Algorithmus ausgebildet. Beispielsweise umfassen das erste Steuerungsmodul und/oder das zweite Steuerungsmodul ein neuronales Netz und/oder weisen einen deeplearning-Algorithmus auf. Insbesondere sind das erste Steuerungsmodul und das zweite Steuerungsmodul so ausgebildet, dass die Machine-Learning-Algorithmen zu unterschiedlichen Zeiten aktiv ausgeführt werden. Insbesondere ist es vorgesehen, dass der Maschine-Learning-Algorithmus des ersten Steuerungsmoduls zeitlich vor dem Durchführen des Machine-Learning-Algorithmus des zweiten Steuerungsmoduls erfolgt. Insbesondere ist es vorgesehen, dass der zweite Machine-Learning-Algorithmus durch das zweite Steuerungsmodul dauerhaft und/oder in Dauerschleife durchgeführt wird. Der Machine-Learning-Algorithmus des ersten Steuerungsmoduls wird insbesondere bei einer Initialisierung und/oder Neuaufnahme einer Fertigung angewandt.

Als Machine-Learning-Algorithmus wird insbesondere verstanden, mittels einer künstlichen Intelligenz Wissen und/oder Erfahrung aufzubauen und/oder zu verbessern. Insbesondere liegen den beiden Machine-Learning-Algorithmen des ersten Steuerungsmoduls und des zweiten Steuerungsmoduls unterschiedliche Lernschwerpunkte und/oder Lernverfahren zugrunde. Beispielsweise sind die Machine-Learning-Algorithmen zum überwachten Lernen, beispielsweise teilüberwachten Lernen, beschränkten Lernen und/oder aktiven Lernen ausgebildet. Alternativ kann der Machine-Learning-Algorithmus zu einem unüberwachten Lernen ausgebildet sein.

Das erste Steuerungsmodul und/oder das zweite Steuerungsmodul ist ausgebildet, basierend auf dem Machine-Learning-Algorithmus und insbesondere basierend auf dem Prozessmerkmal und/oder den eingestellten Prozessparametern Regelwerte für den Prozessparameter zu bestimmen, zu verbessern und/oder zu optimieren. Insbesondere kann das erste Steuerungsmodul und das zweite Steuerungsmodul ausgebildet sein, für die Regelung und Steuerung der Prozessparameter der Prozessstation und/oder der Fertigungsanlage ein Modell zu bestimmen, zu verbessern und/oder zu optimieren. Beispielsweise sind die Steuerungsmodule ausgebildet, mittels des Machine-Learning-Algorithmus den Einfluss eines Prozessparameters und/oder die Änderung in einer Fertigungsanlage bezüglich der Auswirkung auf das Prozessmerkmal und/oder die Qualität des Werkstückes zu untersuchen und/oder zu modellieren.

Der Erfindung liegt die Überlegung zugrunde, dass durch die Verwendung von zwei Steuerungsmodulen mit zwei Machine-Learning-Algorithmen eine Fertigungsanlage mit einer Mehrzahl an Fertigungsprozessen und/oder Prozessparametern optimiert und/oder verbessert werden kann. So ist es möglich, auch komplexe Fertigungsanlagen zu optimieren, bei welcher beispielsweise ein Benutzer leicht den Überblick verlieren würde. So ist es beispielsweise möglich, dass bereits die Veränderung eines einzigen Prozessparameters zu Beginn sich auf die Werkstückqualität und/oder einen Prozess ganz am Ende in der Fertigungsanlage auswirken kann. Durch das Überwachen, insbesondere zeitlich versetzt und/oder mit unterschiedlichen Machine-Learning-Algorithmen, ist es möglich, komplexe Auswirkungen verstehen zu können. Beispielsweise kann die lokale Überwachung mehrerer Prozessstationen so zu einer Optimierung des Resultats führen.

Besonders bevorzugt ist es, dass die Steuerungseinrichtung ein Kombinationsmodul aufweist. Das Kombinationsmodul ist insbesondere als eine Rechnereinheit oder als ein Computer und/oder Rechnerchip ausgebildet. Insbesondere kann das Kombinationsmodul zusammen mit dem ersten Steuerungsmodul und dem zweiten Steuerungsmodul ein Auswertemodul bilden. Dem Kombinationsmodul ist insbesondere der Regelwert und/oder das Modell bereitgestellt, welches von dem ersten Steuerungsmodul und/oder dem zweiten Steuerungsmodul bereitgestellt, bestimmt und/oder verbessert wurde. Insbesondere sind dem Kombinationsmodul die jeweils aktuellen und/oder vergangenen Regelwerte und/oder Modelle bereitgestellt. Ferner sind dem Kombinationsmodul vorzugsweise die eingestellten Prozessparameter, Wertebereiche der Prozessparameter und/oder Prozessmerkmale bereitgestellt. Das Kombinationsmodul ist ausgebildet, basierend auf den Ergebnissen des ersten Steuerungsmoduls und des zweiten Steuerungsmoduls ein Globalmodell der Fertigungsanlage zu verfeinern und/oder zu bestimmen. Dabei ist das Kombinationsmodul ausgebildet, basierend auf einem Machine-Learning-Algorithmus die Daten auszuwerten. Beispielsweise verwendet das Kombinationsmodul die bestimmten Regelwerte und/oder Modelle der beiden Steuerungsmodule dazu, Rückschlüsse auf übergreifende Einflüsse zu bestimmen. Beispielsweise beschreibt das Globalmodell Zusammenhänge, die alleine von dem ersten Steuerungsmodul und dem zweiten Steuerungsmodul nicht hätten erfasst und/oder bestimmt werden können. Die Ergebnisse des Globalmodells, beispielsweise Prozessmerkmale, Auswirkungen, Lerninhalte und/oder Modelle werden dem ersten Steuerungsmodul und/oder dem zweiten Steuerungsmodul bereitgestellt.

Dieser Ausgestaltung liegt die Überlegung zugrunde, dass durch ein Modul, welches ebenfalls auf einem Machine-Learning-Algorithmus beruht, die Ergebnisse von Teilprozessen und/oder Prozessstationen in der Fertigungsanlage auswerten zu können. Mittels der Bestimmung des Globalmodells können so übergreifende und/oder Effekte berücksichtigt werden, die bei der reinen Betrachtung eines einzelnen Prozessparameters, einer einzelnen Prozessstation oder Steuerungsmoduls nicht hätten bestimmt werden können.

Optional ist es vorgesehen, dass die Steuereinrichtung ein Speichermodul umfasst. Das Speichermodul kann Teil einer Rechnereinheit sein. Insbesondere ist das Speichermodul als ein zentrales Speichermodul ausgebildet. Das Speichermodul ist datentechnisch beispielsweise mit dem ersten Steuerungsmodul, dem zweiten Steuerungsmodul und/oder dem Kombinationsmodul verbunden. Das Speichermodul ist zum Speichern von Modellen, Regelwerten, Prozessmerkmalen und/oder Prozessparametern ausgebildet. Insbesondere werden die Modelle, Regelwerte, Prozessmerkmale und/oder Prozessparameter mit einem Zeitstempel versehen und/oder umfassen weitere Daten. Mittels dem Speichermodul kann eine Chronologie der Lernentwicklung, der Modelle und/oder der Regelwerte bestimmt werden. Dieser Ausgestaltung liegt die Überlegung zugrunde, durch das Speichern von Daten einen verbesserten Machine-Learning-Algorithmus und/oder verbesserten Lernerfolg generieren zu können.

Insbesondere ist es vorgesehen, dass das erste Steuerungsmodul ausgebildet ist, als Regelwert einen Anfangswert für den Prozessparameter zu bestimmen.

Beispielsweise ist das erste Steuerungsmodul ausgebildet, bei Wechsel von einem Werkstück zu einem anderen Werkstück, bei Inbetriebnahme und/oder Neustart der Fertigungsanlage oder einer Prozessstation tätig zu werden und Anfangswerte für die Prozessparameter zu bestimmen. Beispielsweise ist das Steuerungsmodul ausgebildet, dass diesem bei Inbetriebnahme oder Produktionsstart, Charge, Werkstück, Werkzeug und/oder weitere Daten bereitgestellt werden, und darauf basierend mittels des Machine-Learning-Algorithmus Anfangswerte für die Produktion bestimmt werden.

Besonders bevorzugt ist es, dass das erste Steuerungsmodul ausgebildet ist, für einen Start und/oder eine Initialisierung einer Fertigung, einer Fertigungsanlage und/oder einer Prozessstation den Anfangswert und/oder die Anfangswerte zu bestimmen. Die Bestimmung des Anfangswerts basiert dabei vorzugsweise auf einem gespeicherten Modell und/oder gespeicherten Regelwert einer vorherigen Fertigung. Eine vorherige Fertigung kann eine direkt vorher getätigte Fertigung eines gleichartigen oder eines anderartigen Werkstückes sein. Alternativ kann zur Bestimmung der Anfangswerte eine Mehrzahl an gespeicherten Modellen und/oder Regelwerten herangezogen werden. Dieser Ausgestaltung liegt die Überlegung zugrunde, dass Erfahrungen aus vorhergegangenen und/oder vergangenen Fertigungen des gleichen oder eines anderen Werkstückes auf die Neuinbetriebnahme angewendet werden können und daraus mittels des Machine-Learning-Algorithmus Erfahrungen gezogen werden können.

Eine Ausgestaltung der Erfindung sieht vor, dass das zweite Steuerungsmodul ausgebildet ist, für die Fertigungsanlage und/oder für die Prozessstation und/oder für die Prozessstationen kontinuierlich einen oder mehrere Regelwerte und/oder ein Modell zu bestimmen. Insbesondere ist es vorgesehen, dass die Regelwertbestimmung und/oder die Modellbestimmung durch das zweite Steuerungsmodul von gefertigtem Werkstück zu gefertigtem Werkstück durchgeführt wird. Alternativ und/oder ergänzend kann die Bestimmung des Regelwertes und/oder des Modells durch das zweite Steuerungsmodul zeitlich zyklisch erfolgen, beispielsweise in äquidistanten Zeitabständen. Vorzugsweise ist es vorgesehen, dass das erste Steuerungsmodul zu Beginn einer Fertigung und/oder bei Start der Fertigungsanlage durchgeführt wird und anschließend das zweite Steuerungsmodul aktiv ist und/oder wird. Dieser Ausgestaltung liegt die Überlegung zugrunde, eine initialisierte Machine-Learning-Anwendung mit dem ersten Steuerungsmodul durchzuführen und eine kontinuierliche mit dem zweiten Steuerungsmodul.

Eine Ausgestaltung der Erfindung sieht vor, dass die Steuerungsvorrichtung ein Schnittstellenmodul aufweist. Beispielsweise ist das Schnittstellenmodul als eine Eingabe- und Ausgabeeinrichtung ausgebildet. Beispielsweise ist das Schnittstellenmodul eine Touchscreen-Einheit. Das Schnittstellenmodul ist beispielsweise zur Anzeige von Daten, Bildern und/oder Videos ausgebildet. Ferner ist es vorgesehen, dass das Schnittstellenmodul insbesondere ausgebildet ist, dass ein Benutzer darauf Daten eingeben kann, beispielsweise etwas ablehnen oder annehmen kann. Das Schnittstellenmodul ist insbesondere ausgebildet, einem Benutzer den Regelwert und/oder ein Modul vorzuschlagen und/oder anzuzeigen, beispielsweise, welches von dem ersten Steuerungsmodul oder dem zweiten Steuerungsmodul angezeigt wurde. Der Benutzer kann, beispielsweise zeitlich unbegrenzt oder in einem festen zeitlichen Rahmen, diesen Regelwert annehmen oder diesen ablehnen. Dieser Ausgestaltung liegt die Überlegung zugrunde, dass weiterhin eine menschliche oder fachliche Person die Steuerung der Fertigungsanlage überwacht und gegebenenfalls unterstützend und/oder helfend einschreiten kann.

Besonders bevorzugt ist es, dass das Prozessmerkmal ein Qualitätsmerkmal eines Werkstücks und/oder eines Zwischenprodukts umfasst. Das Werkstück ist beispielsweise das hergestellte Werkstück der Fertigungsanlage. Ein Zwischenprodukt ist eine Vorstufe oder ein Anfangsobjekt bei der Herstellung des Werkstücks. Als Qualitätsmerkmal kann beispielsweise Form, Materialbeschaffenheit und/oder andere physikalisch-chemische Größen des Objekts verwendet werden. Die Qualitätsmerkmale können von einem Sensor während der Fertigung und/oder während des Fertigungsprozesses bestimmt werden und/oder erfasst worden sein. Alternativ kann es vorgesehen sein, dass die Qualitätsmerkmale von einem Benutzer und/oder einem Labor als Datensatz hinterlegt und/oder eingepflegt werden, beispielsweise in dem Speichermodul. Die Qualitätsmerkmale können daher auch von einer nachgelagerten Qualitätskontrolle stammen und zeitlich versetzt von den Steuermodulen einbezogen werden.

Besonders bevorzugt ist es, dass das Prozessmerkmal eine physikalische und/oder chemische Eigenschaft bildet und/oder beschreibt. Insbesondere beschreibt das Prozessmerkmal ein Chargenmaterialmerkmal. Beispielsweise kann das Prozessmerkmal die Zusammensetzung und/oder die Qualität des Chargenmaterials beschreiben. Ferner ist es beispielsweise vorgesehen, dass das Prozessmerkmal beispielsweise eine Eigenschaft des Werkstücks, des Zwischenprodukts und/oder des Werkzeugs beschreibt. Insbesondere kann die Eigenschaft des Werkzeugs eine Abnutzung, eine Temperatur oder eine Leistungsfähigkeit des Werkzeugs beschreiben. Dieser Ausgestaltung liegt die Überlegung zugrunde, dass das erste Steuerungsmodul und/oder das zweite Steuerungsmodul bei der Bestimmung der Regelwerte und/oder des Modells Chargenschwankungen, Werkstückqualitäten und/oder Werkzeugqualitäten berücksichtigen kann.

Optional ist es vorgesehen, dass das erste Steuerungsmodul ausgebildet ist, dem Machine-Learning-Algorithmus ein Modell, eine Simulation und/oder eine Vorhersage zugrunde zu legen oder dort einzubeziehen. Beispielsweise kann das Modell eine Modellierung der Fertigungsanlage oder des Fertigungsprozesses darstellen. Das Modell kann ferner beispielsweise ein Plan zur Durchführung der Fertigung sein, der von einem Benutzer oder Einsteller vorgeben wird. Als Vorhersagen können beispielsweise Annahmen aufgefasst werden, die von einem Benutzer oder Einsteller hinterlegt und/oder eingegeben wurden. Dieser Ausgestaltung liegt die Überlegung zugrunde, das erste Steuerungsmodul, welches insbesondere eine Initialisierung der Fertigungsanlage beschreibt, auf einem erweiterten Datensatz aufbauen zu können.

Insbesondere ist das Kombinationsmodul ausgebildet, einen Datenaustausch, einen Modellaustausch, einen Wissensaustausch und/oder einen Parameteraustausch zwischen dem ersten Steuerungsmodul und dem zweiten Steuerungsmodul zu vermitteln, durchzuführen und/oder zu ermöglichen. Beispielsweise ist das Kombinationsmodul ausgebildet, Daten, Modell, Wissen und/oder Parameter von dem ersten Steuerungsmodul abzufragen und/oder zu erhalten und diese dem zweiten Steuerungsmodul bereitzustellen. Das gleiche Prinzip ist auch durch ein Abrufen vom zweiten Steuerungsmodul und zum Weiterleiten an das erste Steuerungsmodul möglich. Insbesondere erfolgt die Vermittlung und/oder der Austausch zwischen dem ersten Steuerungsmodul und dem zweiten Steuerungsmodul über das Kombinationsmodul in einer gefilterten Art und Weise, sodass beispielsweise nur Daten, Modelle, Wissen und/oder Parameter ausgetauscht werden, welche nötig sind.

Optional ist es vorgesehen, dass das Kombinationsmodul ausgebildet ist, eine Wissensreduktion und/oder eine Sensitivitätsanalyse vor und/oder bei einem Austausch von Daten, Modell, Wissen und/oder Parametern zwischen dem ersten und dem zweiten Steuerungsmodul durchzuführen. Dieser Ausgestaltung liegt die Überlegung zugrunde, dass es zu keiner Übertrainierung und/oder überflüssigen Mehrfachwissen kommt. So kann eine effiziente und schmale Steuereinrichtung erzeugt werden.

Einen weiteren Gegenstand der Erfindung bildet eine Fertigungsanlage. Die Fertigungsanlage weist mindestens eine Prozessstation zur Durchführung eines Fertigungsprozesses auf, wobei die Prozessstation und/oder die Fertigungsanlage einen Prozessparameter zur Regelung und/oder Steuerung aufweist. Die Fertigungsanlage weist eine Steuereinrichtung auf, insbesondere eine Steuereinrichtung wie vorher beschrieben. Die Steuereinrichtung weist ein erstes Steuerungsmodul und ein zweites Steuerungsmodul auf. Das erste Steuerungsmodul und das zweite Steuerungsmodul sind ausgebildet, basierend auf einem Machine-Learning-Algorithmus zeitlich versetzt ein Modell und/oder einen Regelwert für die Fertigungsanlage zu bestimmen und insbesondere die Fertigungsanlage basierend auf dem Regelwert und/oder dem Modell einzustellen und/oder zu steuern.

Besonders bevorzugt ist es, dass die Fertigungsanlage eine Mehrzahl an Prozessstationen aufweist. Insbesondere kann es vorgesehen sein, dass die Fertigungsanlage eine Mehrzahl an zweiten Steuerungsmodulen aufweist, wobei die zweiten Steuerungsmodule jeweils zur Steuerung, Überwachung und/oder Bestimmung von Regelwerten einer unterschiedlichen Prozessstation ausgebildet sind. Ein Kombinationsmodul, welches von der Steuervorrichtung umfasst ist, kann beispielsweise die Mehrzahl an zweiten Steuerungsmodulen miteinander vernetzen und zu einem Datenaustausch beitragen. Dieser Ausgestaltung liegt die Überlegung zugrunde, eine Fertigungsanlage mit einer Mehrzahl an Prozessstationen durch eine Mehrzahl an Steuerungsmodulen, welche auf einem Machine-Learning-Algorithmus beruhen, auszuwerten und/oder zu überwachen, wobei nachgelagert die gewonnenen Regelwerte und/oder Modelle mit einem Kombinationsmodul zusammenzufassen und gegebenenfalls weiter auszuwerten.

Einen weiteren Gegenstand der Erfindung bildet ein Verfahren zur Steuerung einer Fertigungsanlage mit einer Mehrzahl an Prozessstationen. Das Verfahren sieht vor, dass die Fertigungsanlage und/oder die Prozessstationen basierend auf zwei Machine-Learning-Algorithmen überwacht, ausgewertet und/oder gesteuert werden. Die Machine-Learning-Algorithmen werden insbesondere zeitlich versetzt durchgeführt und/oder weisen unterschiedliche Lernschwerpunkte auf. Insbesondere ist es vorgesehen, dass ein weiterer Machine-Learning-Algorithmus auf die Ergebnisse, beispielsweise Regelwerte und/oder Modelle der beiden anderen Machine-Learning-Algorithmen zugreifen kann, und basierend auf deren Ergebnissen globalere Aussagen und/oder Modelle erstellen kann.

Weitere Vorteile, Wirkungen und Ausgestaltungen ergeben sich aus der beigefügten Figur und deren Beschreibung. Dabei zeigt:

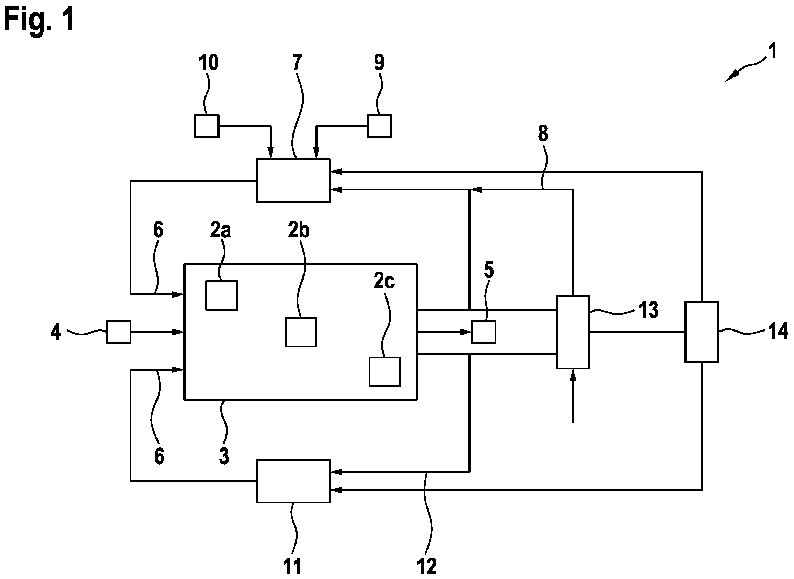

Figur 1 schematisch ein Ausführungsbeispiel einer Fertigungsanlage.

Figur 1 zeigt schematisch ein Ausführungsbeispiel einer Fertigungsanlage 1. Die Fertigungsanlage 1 weist eine Mehrzahl an Prozessstationen 2a, 2b und 2c auf. Die Prozessstationen 2a, 2b und 2c sind beispielsweise Prozessstationen in einem Fertigungsabschnitt 3, welcher einen Abschnitt einer Fabrikhalle darstellt. Die Prozessstationen 2a, 2b und 2c sind zur Durchführung eines Fertigungsverfahrens ausgebildet. Beispielsweise sind diese zum Bohren, Schneiden, Wärmebehandeln ausgebildet. Insbesondere bilden die Prozessstationen 2a, 2b, 2c verkettete Fertigungsverfahren ab. Mittels der Fertigungsanlage 1 und/oder den Prozessstationen 2a, 2b, 2c wird aus einem Ausgangsmaterial 4 ein Werkstück 5 gebildet. Das Ausgangsmaterial 4 ist abhängig von einem Chargenmaterial und somit Produkt- und/oder Materialschwankungen unterworfen. Die Prozessstationen 2a, 2b, 2c können mit einem Werkzeug ausgestattet sein, welches zur Bearbeitung von Material und zur Herstellung des Werkstücks 5 ausgebildet sind.

Die Fertigungsanlage 1 und/oder die Prozessstationen 2a, 2b, 2c weisen Prozessparameter 6 auf, mittels welcher die Prozessstationen 2a, 2b, 2c und/oder die Fertigungsanlage 1 gesteuert und/oder eingestellt werden kann. Durch eine Variation der Prozessparameter 6 kann Einfluss genommen werden auf die Qualität und/oder Art des Werkstückes 5.

Die Fertigungsanlage 1 weist ein erstes Steuermodul 7 auf. Dem ersten Steuermodul 7 sind Informationen und/oder Daten aus vorherigen Prozessen, beispielsweise Fertigungen von Werkstücken 5, als Vorgängerdaten 8 bereitgestellt. Ferner sind dem ersten Steuermodul 7 Prozesssimulationen 9 und Annahmen 10 bereitgestellt. Die Prozesssimulationen 9 und/oder die Annahmen 10 können von einem Computerprogramm oder einem Bediener bereitgestellt werden. Ferner sind dem Steuerungsmodul 7 Informationen und/oder Daten über das Werkstückmaterial, dem eingesetzten Werkzeug, dem aktuellen Prozess und/oder weitere physikalisch-chemische Informationen zu Vorgängen bereitgestellt. Das erste Steuerungsmodul 7 ist ausgebildet, einen Machine-Learning-Algorithmus auszuführen. Basierend auf diesem Machine-Learning-Algorithmus wird ein modellbasierter Lernalgorithmus durchgeführt, sodass Prozessparameter festlegbar sind, und Regelwerte ausgebbar sind.

Insbesondere erfolgt die modellbasierte Bestimmung und/oder der Machine-Learning-Algorithmus zum Ermitteln von physikalischen und/oder chemischen Ursache-Wirkbeziehungen der Fertigungsanlage 1. Durch die Verwendung von Informationen von vorangegangenen Fertigungen und/oder Prozessen wird ein Modell und/oder erlerntes Wissen stetig verbessert und Analysealgorithmen gegebenenfalls verfeinert. Somit ist es mit dem ersten Steuerungsmodul 7 möglich, prozessinterne und/oder übergreifende Wechselwirkungen identifizieren zu können und gegebenenfalls schneller negative Einflüsse auf die Qualität minimieren zu können. Mittels dem ersten Steuerungsmodul 7 können so Anfangswerte und/oder Parameter festgelegt werden, mittels welcher die Fertigungsanlage betrieben werden kann, um das Werkstück 5 produzieren zu können. Das Steuerungsmodul 7 kann ausgebildet sein, basierend auf den bestimmten Werten, Parametern, Regelwerten und/oder Modellen die Fertigungsanlage mit den Prozessparametern 6 einstellen zu können.

Die Fertigungsanlage 1 weist ein zweites Steuerungsmodul 11 auf. Das zweite Steuerungsmodul 11 ist zur Durchführung eines Machine-Learning-Algorithmus ausgebildet. Dem zweiten Steuerungsmodul 11 sind Prozessparameter und/oder Prozessmerkmale 12 bereitgestellt. Basierend auf den Prozessmerkmalen und dem Machine-Learning-Algorithmus ist das zweite Steuerungsmodul 11 ausgebildet, kontinuierlich die Prozessparameter nachzuregeln und beispielsweise Regelwerte für diese Prozessparameter 6 zu bestimmen. Insbesondere kann das Steuerungsmodul 11 ausgebildet sein, ein Modell zu bestimmen und/oder zu verfeinern, welches Ursache und Wirkung von Variation von Prozessparametern auf die Prozessmerkmale beschreibt. Vorzugsweise ist das zweite Steuerungsmodul 11 ausgebildet, jede Prozessstation separat zu überwachen, oder alternativ Kombinationen von Prozessstationen mit dem Machine-Learning-Algorithmus zu überwachen.

Die Fertigungsanlage 1 weist ein Speichermodul 13 auf. Dem Speichermodul 13 sind die Regelwerte, das Modell und/oder die Prozessparameter des ersten Steuerungsmoduls 7, des zweiten Steuerungsmoduls 11 und/oder der Prozessstationen 2a, 2b und 2c bereitgestellt. Diese werden dort zentral gespeichert. Ferner können dem Speichermodul 13 externe Daten bereitgestellt sein, beispielsweise aus einer nachfolgenden Qualitätssicherung, welche insbesondere extern durchgeführt wird. Die Daten und/oder Teilmengen der Daten in dem Speichermodul 13 sind insbesondere dem ersten Steuerungsmodul 7 und dem zweiten Steuerungsmodul 11 bereitgestellt.

Die Fertigungsanlage 11 weist ein Kombinationsmodul 14 auf. Das Kombinationsmodul 14 ist ausgebildet, einen Datenaustausch zwischen dem ersten Steuerungsmodul 7 und dem zweiten Steuerungsmodul 11 zu ermöglichen. Insbesondere ist das Kombinationsmodul 14 ausgebildet, basierend auf einem Machine-Learning-Algorithmus die Ergebnisse des ersten Steuerungsmoduls und des zweiten Steuerungsmoduls zu untersuchen, und beispielsweise Zusammenhänge wie Ursache-Wirk-Prinzipien zu extrahieren. Mittels dem Kombinationsmodul 14 ist es damit möglich, eigenständiges Lernen über Wirkprinzipzusammenhänge zwischen den beiden bestimmten Modellen des ersten Steuerungsmoduls und des zweiten Steuerungsmoduls zu bestimmen. Ferner kann es vorgesehen sein, dass das Kombinationsmodul 14 zu einer Wissensreduktion ausgebildet ist und dazu beispielsweise eine Sensitivitätsanalyse durchführt. Somit ist die Vermeidung von Übertrainierung und Mehrfachwissen in dem ersten Steuerungsmodul und dem zweiten Steuerungsmodul reduziert.

Insbesondere liegt der Erfindung die Überlegung zugrunde, dass das erste Steuerungsmodul 7 optimale Parameter für den Prozess der Prozessstation 2a, 2b und/oder 2c bestimmt, wobei das Steuerungsmodul 11 diese Parameter entsprechend aktueller Bedingungen im Prozessverlauf laufend anpasst. Das erste Steuerungsmodul 7 ist für die statische Auslegung und/oder Optimierung ausgebildet, wobei das zweite Steuerungsmodul eine dynamische Optimierung durchführt.

## Patentansprüche

1. Steuerungseinrichtung zur Steuerung einer Fertigungsanlage (1),
wobei die Fertigungsanlage (1) mindestens eine Prozessstation (2a, b, c) zur Durchführung eines Fertigungsprozesses umfasst,
wobei die Fertigungsanlage (1) und/oder die Prozessstation (2a, b, c) mindestens einen Prozessparameter (6) zur Regelung und/oder Steuerung aufweist,
wobei die Fertigungsanlage (1) und/oder die Prozessstation (2a, b, c) mindestens eine Erfassungseinrichtung zur Erfassung mindestens eines Prozessmerkmals (12) aufweist,
**gekennzeichnet durch** ein erstes Steuerungsmodul (7) und ein zweites Steuerungsmodul (11), wobei das erste Steuerungsmodul (7) und das zweite Steuerungsmodul (11) ausgebildet ist, zur Regelung der Fertigungsanlage (1) und/oder der Prozessstation (2a, b, c) basierend auf unterschiedlichen, jeweils einem Machine-Learning-Algorithmus und dem Prozessmerkmal (12) für den Prozessparameter (6) einen Regelwert und/oder ein Modell zu bestimmen.

2. Steuerungseinrichtung nach Anspruch 1, **gekennzeichnet durch** ein Kombinationsmodul (14), wobei dem Kombinationsmodul (14) der Regelwert und/oder das Modell des ersten Steuerungsmoduls (7) und des zweiten Steuerungsmoduls (11) bereitgestellt ist, wobei das Kombinationsmodul (14) ausgebildet ist, basierend auf einem Machine-Learning-Algorithmus ein Globalmodell der Fertigungsanlage (1) zu verfeinern und/oder zu bestimmen, wobei das Kombinationsmodul (14) ausgebildet ist, das Globalmodell dem ersten Steuerungsmodul (7) und/oder dem zweiten Steuerungsmodul (12) bereitzustellen.

3. Steuereinrichtung nach einem der der Ansprüche 1 oder 2, **gekennzeichnet durch** ein Speichermodul (13) zum Speichern bestimmter Modelle und/oder Regelwerte.

4. Steuerungseinrichtung nach einem der vorherigen Ansprüche, **dadurch gekennzeichnet, dass** das erste Steuerungsmodul (7) ausgebildet ist, als Regelwert einen Anfangswert für den Prozessparameter (6) zu bestimmen.

5. Steuereinrichtung nach Anspruch 4, **dadurch gekennzeichnet, dass** das erste Steuermodul (7) ausgebildet ist, für einen Start einer Fertigung den Anfangswert zu bestimmen, wobei die Bestimmung des Anfangswerts auf einem gespeicherten Modell und/oder Regelwert einer vorherigen Fertigung basiert.

6. Steuereinrichtung nach einem der vorherigen Ansprüche, **dadurch gekennzeichnet, dass** das zweite Steuerungsmodul (7) ausgebildet ist, für die Fertigungsanlage (1) und/oder die Prozessstation (2a, b, c) kontinuierlich einen Regelwert und/oder ein Modell zu bestimmen.

7. Steuerungsvorrichtung nach einem der vorherigen Ansprüche, **gekennzeichnet durch** ein Schnittstellenmodul, wobei das das Schnittstellenmodul ausgebildet ist, den Regelwert des ersten Steuerungsmoduls (7) und/oder zweiten Steuermoduls (11) einem Benutzer zur Bestätigung bereitzustellen.

8. Steuerungsvorrichtung nach einem der vorherigen Ansprüche, **dadurch gekennzeichnet, dass** das Prozessmerkmals (12) ein Qualitätsmerkmal eines Werkstücks (5) und/oder Zwischenprodukts umfasst.

9. Steuervorrichtung nach einem der vorherigen Ansprüche, **dadurch gekennzeichnet, dass** das Prozessmerkmal (12) eine physikalische und/oder chemische Eigenschaft eines Chargenmaterials, des Werkstücks (12), des Zwischenprodukts und/oder eines Werkzeugs umfasst.

10. Steuervorrichtung nach einem der vorherigen Ansprüche, **dadurch gekennzeichnet, dass** erste Steuermodul (7) ausgebildet, dem Machine-Learing-Algorithmus ein Modell, eine Simulation und/oder Vorhersagen zugrunde zu legen.

11. Steuervorrichtung nach einem der vorherigen Ansprüche, **dadurch gekennzeichnet, dass** das Kombinationsmodul (14) ausgebildet ist einen Datenaustausch, einen Modellaustausch, Wissensaustausch und/oder Parameteraustausch zwischen dem ersten Steuermodul (7) und dem zweiten Steuermodul (11) zu vermitteln.

12. Steuervorrichtung nach einem der vorherigen Ansprüche, **dadurch gekennzeichnet, dass** das Kombinationsmodul (14) ausgebildet ist, eine Wissensreduktions- und/oder Sensitivitätsanalyse für die Modelle und/oder Regelwerte des ersten Steuermoduls (7) und/oder des zweiten Steuermoduls (11).

13. Fertigungsanalage (1) mit mindestens einer Prozessstation (2a, b, c) und einer Steuervorrichtung zur Regelung der Fertigungsanlage (1) nach einem der vorherigen Ansprüche.

14. Fertigungsanlage nach Anspruch 13, **dadurch gekennzeichnet, dass** die die Fertigungsanlage mehr als 2 Prozessstationen umfasst.

15. Verfahren zur Steuerung einer Fertigungsanlage (1) nach einem der Ansprüche 13 oder 14, mit einer Mehrzahl an Prozessstationen (2a, b, c), wobei das erste Steuerungsmodul (7) und das zweite Steuerungsmodul (11) die Fertigungsanlage (1) und/oder die Prozessstationen (2a, b, c) basierend auf zwei unterschiedlichen Machine-Learning-Algorithmen regeln.

## Claims

1. Control device for controlling a manufacturing installation (1),
the manufacturing installation (1) comprising at least one process station (2a, b, c) for carrying out a manufacturing process,
the manufacturing installation (1) and/or the process station (2a, b, c) having at least one process parameter (6) for closed-loop and/or open-loop control,
the manufacturing installation (1) and/or the process station (2a, b, c) having at least one detection device for detecting at least one process feature (12),
**characterized by** a first control module (7) and a second control module (11), the first control module (7) and the second control module (11) being designed to determine a controlled value and/or a model for the process parameter (6) on the basis of different instances of in each case a machine learning algorithm and the process feature (12) for closed-loop control of the manufacturing installation (1) and/or the process station (2a, b, c).

2. Control device according to Claim 1, **characterized by** a combination module (14), the controlled value and/or the model of the first control module (7) and of the second control module (11) being provided to the combination module (14), the combination module (14) being designed to refine and/or determine a global model of the manufacturing installation (1) on the basis of a machine learning algorithm, the combination module (14) being designed to provide the global model to the first control module (7) and/or the second control module (12).

3. Control device according to either of Claims 1 and 2, **characterized by** a storage module (13) for storing determined models and/or controlled values.

4. Control device according to any of the preceding claims, **characterized in that** the first control module (7) is designed to determine an initial value for the process parameter (6) as the controlled value.

5. Control device according to Claim 4, **characterized in that** the first control module (7) is designed to determine the initial value for a start of manufacturing, the determination of the initial value being based on a stored model and/or controlled value of previous manufacturing.

6. Control device according to any of the preceding claims, **characterized in that** the second control module (7) is designed to continuously determine a controlled value and/or a model for the manufacturing installation (1) and/or the process station (2a, b, c).

7. Control device according to any of the preceding claims, **characterized by** an interface module, the interface module being designed to provide the controlled value of the first control module (7) and/or second control module (11) to a user for confirmation.

8. Control device according to any of the preceding claims, **characterized in that** the process feature (12) comprises a quality feature of a workpiece (5) and/or of an intermediate product.

9. Control device according to any of the preceding claims, **characterized in that** the process feature (12) comprises a physical and/or chemical property of a batch material, of the workpiece (12), of the intermediate product and/or of a tool.

10. Control device according to any of the preceding claims, **characterized in that** the first control module (7) is designed to use a model, a simulation and/or predictions as a basis for the machine learning algorithm.

11. Control device according to any of the preceding claims, **characterized in that** the combination module (14) is designed to mediate a data exchange, a model exchange, knowledge exchange and/or parameter exchange between the first control module (7) and the second control module (11).

12. Control device according to any of the preceding claims, **characterized in that** the combination module (14) is designed a knowledge reduction and/or sensitivity analysis for the models and/or controlled values of the first control module (7) and/or of the second control module (11).

13. Manufacturing installation (1) comprising at least one process station (2a, b, c) and a control device for controlling the manufacturing installation (1) according to any of the preceding claims.

14. Manufacturing installation according to Claim 13, **characterized in that** the manufacturing installation comprises more than 2 process stations.

15. Method for controlling a manufacturing installation (1) according to either of Claims 13 and 14, comprising a plurality of process stations (2a, b, c), wherein the first control module (7) and the second control module (11) control the manufacturing installation (1) and/or the process stations (2a, b, c) on the basis of two different machine learning algorithms.

## Revendications

1. Dispositif de commande permettant de commander une installation de fabrication (1),
dans lequel l'installation de fabrication (1) comprend au moins une station de processus (2a, b, c) pour exécuter un processus de fabrication,
dans lequel l'installation de fabrication (1) et/ou la station de processus (2a, b, c) présente au moins un paramètre de processus (6) pour la régulation et/ou la commande,
dans lequel l'installation de fabrication (1) et/ou la station de processus (2a, b, c) présente au moins un dispositif de détection pour détecter au moins une propriété de processus (12),
**caractérisé par** un premier module de commande (7) et un deuxième module de commande (11), le premier module de commande (7) et le deuxième module de commande (11) étant réalisés pour déterminer une valeur de régulation et/ou un modèle en vue de réguler l'installation de fabrication (1) et/ou la station de processus (2a, b, c) sur la base respectivement d'un algorithme d'apprentissage machine différent et de la propriété de processus (12) pour le paramètre de processus (6).

2. Dispositif de commande selon la revendication 1, **caractérisé par** un module combiné (14), dans lequel la valeur de régulation et/ou le modèle du premier module de commande (7) et du deuxième module de commande (11) est fournie au module combiné (14), dans lequel le module combiné (14) est réalisé pour affiner et/ou déterminer un modèle global de l'installation de fabrication (1) sur la base d'un algorithme d'apprentissage machine, dans lequel le module combiné (14) est réalisé pour fournir le modèle global au premier module de commande (7) et/ou au deuxième module de commande (12).

3. Dispositif de commande selon l'une quelconque des revendications 1 ou 2, **caractérisé par** un module de stockage (13) pour stocker des modèles et/ou valeurs de régulation déterminés.

4. Dispositif de commande selon l'une quelconque des revendications précédentes, **caractérisé en ce que** le premier module de commande (7) est réalisé pour déterminer une valeur initiale pour le paramètre de processus (6) en tant que valeur de régulation.

5. Dispositif de commande selon la revendication 4, **caractérisé en ce que** le premier module de commande (7) est réalisé pour déterminer une valeur initiale pour démarrer une fabrication, dans lequel la détermination de la valeur initiale est basée sur un modèle stocké et/ou une valeur de régulation stockée d'une fabrication précédente.

6. Dispositif de commande selon l'une quelconque des revendications précédentes, **caractérisé en ce que** le deuxième module de commande (7) est réalisé pour déterminer en continu une valeur de régulation et/ou un modèle pour l'installation de fabrication (1) et/ou la station de processus (2a, b, c).

7. Dispositif de commande selon l'une quelconque des revendications précédentes, **caractérisé par** un module d'interface, le module d'interface étant réalisé pour fournir la valeur de régulation du premier module de commande (7) et/ou du deuxième module de commande (11) à un utilisateur en vue d'une confirmation.

8. Dispositif de commande selon l'une quelconque des revendications précédentes, **caractérisé en ce que** la propriété de processus (12) comprend une propriété de qualité d'une pièce à travailler (5) et/ou d'un produit intermédiaire.

9. Dispositif de commande selon l'une quelconque des revendications précédentes, **caractérisé en ce que** la propriété de processus (12) comprend une propriété physique et/ou chimique d'une matière gérée par lot, de la pièce à travailler (12), du produit intermédiaire et/ou d'un outil.

10. Dispositif de commande selon l'une quelconque des revendications précédentes, **caractérisé en ce que** le premier module de commande (7) est réalisé pour baser l'algorithme d'apprentissage machine sur un modèle, une simulation et/ou des prévisions.

11. Dispositif de commande selon l'une quelconque des revendications précédentes, **caractérisé en ce que** le module combiné (14) est réalisé pour établir un échange de données, un échange de modèle, un échange de connaissances et/ou un échange de paramètre entre le premier module de commande (7) et le deuxième module de commande (11).

12. Dispositif de commande selon l'une quelconque des revendications précédentes, **caractérisé en ce que** le module combiné (14) est réalisé une analyse de réduction de connaissances et/ou de sensibilité pour les modèles et/ou valeurs de régulation du premier module de commande (7) et/ou du deuxième module de commande (11).

13. Installation de fabrication (1) comprenant au moins une station de processus (2a, b, c) et un dispositif de commande pour réguler l'installation de fabrication (1) selon l'une quelconque des revendications précédentes.

14. Installation de fabrication selon la revendication 13, **caractérisé en ce que** l'installation de fabrication comprend plus de 2 stations de processus.

15. Procédé permettant de commander une installation de fabrication (1) selon l'une quelconque des revendications 13 ou 14, comprenant une pluralité de stations de processus (2a, b, c), dans lequel le premier module de commande (7) et le deuxième module de commande (11) régulent l'installation de fabrication (1) et/ou les stations de processus (2a, b, c) sur la base de deux algorithmes d'apprentissage machine différents.
